# EUROPEAN PATENT APPLICATION

(11) **EP 0 773 660 A2**
(43) Date of publication of application: **14.05.1997**
(21) Application number: 96202647.2
(22) Date of filing: 23.09.1996
(51) Int. Cl.: H04N 1/00

(54) **Method and apparatus for scanning and processing of original images**

(30) Priority: 13.11.1995 US 6651
(71) Applicant: Bayer Corporation, Pittsburgh, PA 15219-2502 (US)
(72) Inventor: Pandelaerts, Patrick, Andover, MA 01810 (US); Lamproye, Rudi H., Andover, MA 01810 (US)
(74) Representative: Ramon, Charles Lucien

(57) **Abstract**

A method and apparatus for scanning and final processing of original images, wherein pre-scanning functions are limited to those which can be carried out independently of the scanning and final processing functions, and wherein each original image is scanned only once at the a spatial resolution and digital data accuracy at least as great as those required for final processing. No preview scan or other image processing steps are carried out prior to scanning. An image so acquired is stored in an image server, accessible to one or more post-scanning image processing workstations, and all final image processing operations are performed using the original image data obtained from the image server. The stored image can be archived for later use, serving as a digital replica of the original.

## Description

The field of the invention is the use of digital scanning systems in the electronic pre-press and photographic industries. The invention relates specifically to the scanning and image processing of original images in a production environment.

As the electronic pre-press industry has evolved, image quality expectations have increased greatly, thereby involving the use of ever more expensive scanning and processing equipment. Efficient work flow and productivity (both for expensive equipment and skilled labor) involves keeping the scanner functioning at the highest possible duty cycle performing productive work. Increasingly, the scanning process and the (skill-intensive) post-scanning image processing become the determinants to the rate at which original images can be processed by a facility providing these services.

A major factor in determining the time involved per original image for scanning and post-scanning image processing is the necessity, in presently available systems, of performing a low-resolution scan of an image to determine final scan settings. Once a preview scan has been made, a final scan is made at a predetermined spatial and A/D resolution, thereby creating a rectangular array of picture elements, referred to as "pixels", which are then processed using methods well known in the prior art, typically for output to printed media using offset or other printing methods. Post-scanning image processing for example includes color correction, rotation, scaling, and selection of the specific area of the image to be printed (cropping).

The motivation for a separate preview scan in prior-art systems has been the result of processing and storage resource requirements, i.e., for scanning data acquisition, transfer and computation rates, and for mass digital storage of image data. An A3 sized color reproduction, for example, typically requires a file size of 110 Megabytes for RGB data stored at 16 bits per color per pixel. The total storage used by a set of images stored at this rate can be several Gigabytes. An added factor for files of this size is the CPU power required for an interactive processing session, e.g., for redrawing the console screen and for video processing operations such as unsharp masking. The traditional approach to processing has been to limit the data initially captured to that to be used for a specific application, and to make processing changes directly to the acquired data to avoid storing multiple copies of data. In this approach, archiving of images for future use has not been feasible due to the requirement for limiting the size of the data set, and due to the irreversible changes to data made in processing.

It is accordingly an object of the invention to provide a method for scanning and post-scan image processing in a high-productivity scanning system.

It is specific object of the invention to maximize the utilization of resources in a production scanner/ image-processing system through elimination of the necessity of extra scans and on-line processing steps carried out solely for the purpose of reducing the amount of data to be processed and stored.

It is another specific object of the invention to provide for storage of original image data in a form retaining all information acquired in the scanning process.

It is a feature of the invention that the initial setup and processing of original images can be carried out without the involvement of a high-skilled operator.

It is another feature of the invention that all image processing operations involving high-skilled operators can be carried out in parallel on images previously scanned, while maintaining a high duty cycle of the scanning system for high-resolution scanning.

The invention is a method and apparatus for scanning and final processing of original images, wherein:
1. pre-scanning functions are limited to those which can be carried out independently of the scanning system by one or more relatively low-skilled operators;
2. Each original image is scanned once and only once at the maximum spatial and A/D resolution required in final processing, using scanning limit specification and other information obtained without using a preview scan;
3. The raw scanning data of the original image is stored in a digital data storage medium ("image server") accessible to one or more post-scanning image processing workstations; and,
4. All image processing procedures, including final cropping, color correction, and video processing as required for the image are carried out using the unaltered raw scanning data obtained from the image server as input, thereby producing an output image data set transformed as appropriate for a specific application.

The invention differs from the prior art in that the initial preparation steps are generally limited to mounting and identifying an image, whereas in the prior art, a scanner and an operator are involved in a preview scanning step carried out in part to reduce the amount of time and data storage used for the high resolution scanned image. In the method of the invention, the data is acquired at a resolution and digital accuracy sufficient to cover the requirements of all envisioned applications. This available information is usually a superset of that actually needed for any given application. For example, the original image can be cropped to produce an output image of a smaller size. The resolution of the raw image data can be processed to produce a lower effective resolution in the output image, and (irreversible) image enhancement techniques can be applied without affecting the original data. The price paid for acquisition of an information superset is the excess automatic processing time and digital data storage requirements. As the state of the art of processing and storage systems advances, this price can increasingly be traded off favorably against the higher productivity of expensive equipment and skilled personnel involved, together with the reusability of the original data.

The objects and features of the invention will best be understood from a detailed description of the invention and a preferred embodiment thereof selected for the purposes of illustration and shown in the accompanying drawings in which:
**FIG. 1** shows a system block diagram of a scanning system according to the prior art; and,
**FIG. 2** shows a system block diagram of a scanning system according to the invention.

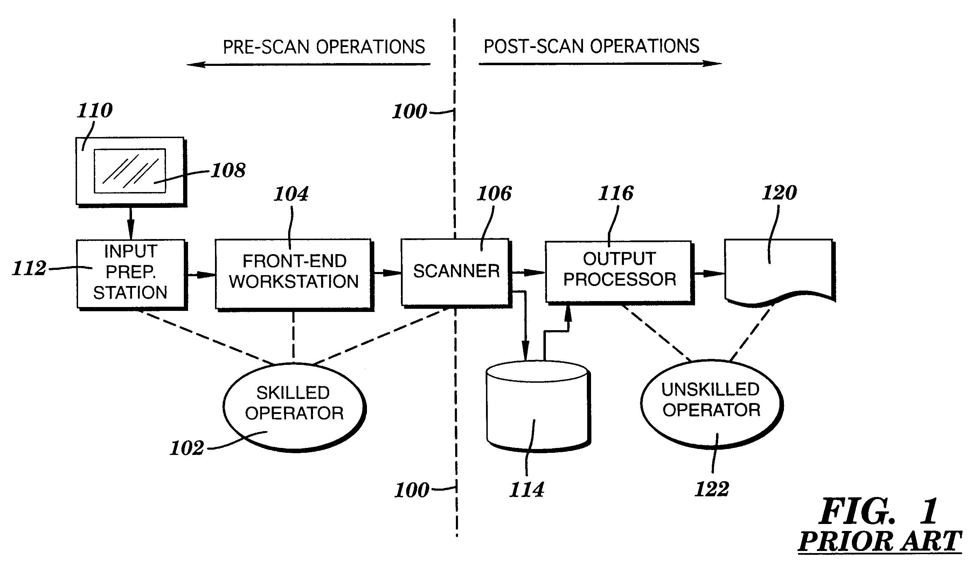

Turning now to the drawings, the invention will be explained in detail. **FIG. 1** shows a system block diagram of a scanning system according to the prior art. In the drawing, line **100** divides components and operations into pre-scan functions and post-scan functions. The pre-scan components and functions are associated with a skilled operator **102**, a "front-end" workstation **104** and a scanner **106** which is used multiply in the processing of an original image **108** mounted either in an image holder (or drum) **110**. Preparations are carried out by skilled worker **102** first at an input preparation station **112**, and include physical mounting of an original image **108**, as well as cropping by masking or digitizing, and rotation -- if required -- by physically mounting at an angular disposition within the original holder **110**. After using scanner **106** to obtain a low-resolution preview scan, further refinements are carried out by skilled operator **102** using the front-end workstation **104** for final cropping of the preview scanned image, and adjustment of color levels and balance.

Once the pre-scan operations have been completed in the prior art system of **FIG. 1**, a final scan at high resolution can be carried out in scanner **106** using information passed to it for control purposes and data correction. In the drawing, this link is accomplished using a workstation **104**, although direct manual input to the scanner is often used, depending upon the sophistication of the scanning system. An image scanned in this manner can be retained in a digital data storage system **114**, or it can be output directly using output processor **116** for formatting and control of an output device **120**. The output processor **116** typically applies a digital halftoning screen to the continuous tone image data. The output **120** is typically a device such as an imagesetter or printer. The operations involved with the system components to the right of the line **100** are performed by an operator **122**, and require only minimal skills. In this system, the productivity of the skilled operator **102** is limited by the rate at which the scanner **106** can process images set up, previewed, adjusted and finally scanned for storage or output. Aside from mounting operations, which can be done in parallel with actual scanning, the operator **102** must necessarily spend a significant portion of time waiting for scans, preview or final, to be completed.

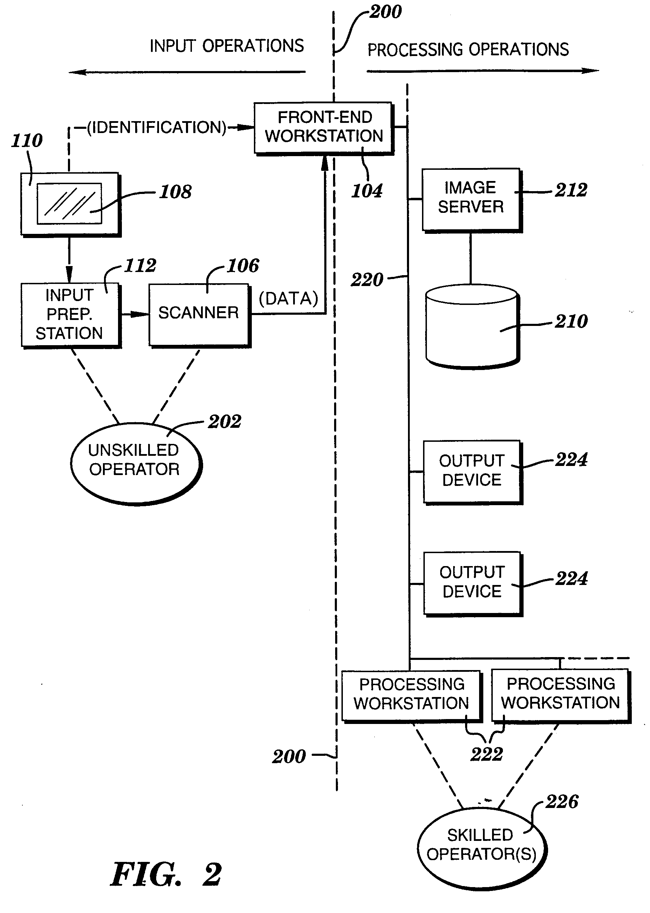

**FIG. 2** shows a system block diagram of a scanning system according to the invention. In this case the line **200** divides components and operations into image input and image processing functions. The input operations are carried out by an operator **202** and include the mounting of original images **108** in holder **110**, followed by a single data acquisition scan, using a computer application **204** for scanner set up using parameters input at a workstation **104**. The overall scan limits can be set without a preview scan along with the desired resolution (maximum appropriate for the archived data representing the image being scanned), along with identification information input for use in storage and access of the data. After scanning, the raw data representing an image is stored in a digital storage system **210** under control of an "image server" **212**, i.e., a computer dedicated to image storage and access. In the drawing, a network **220** is used for communication between the input system components, the server **212**, image processing workstations **222**, and output devices **224**. Once located in the image server **212**, digital data representing a scanned image is available for processing at one or more workstations **222** by image processing operators **226**. In this configuration, the input operations carried out by operator **202** require relatively low skill, while those to right of the line **200** are done by one or more operators **226** at workstations **222**, requiring relatively higher skills. In this case, the throughput of the system is determined by the rate at which images can be scanned and entered into the server **212**. The number of image processing workstations can be set, depending upon the nature of the images being processed and the operations required, so as to achieve a maximum degree of utilization of skilled personnel and expensive "back end" equipment. In addition, a set of images already mounted and identified can be "batch processed" by scanning in sequence, with little -- if any -- required operator intervention. Processing of an image at a workstation can begin as soon as the first image of the batch has been scanned and archived, and can continue, essentially without interruption, until the last has been scanned and archived.

Finally, since the original image data is archived in a "read-only" state, it can be used in parallel by multiple workstations **222**, thereby simultaneously creating different output images for different applications. In addition, the archive remains available for re-processing in different ways as required for new applications.

## Claims

1. A method for scanning and final image processing of original images, said method comprising the steps:
selecting an original image for scanning and final image processing;
determining scan limits to be used for scanning said original image in a scanning system;
determining a spatial resolution to be used for scanning said original image in said scanning system, said spatial resolution being at least as great as that to be used for said final image processing of said original image;
determining a digital data accuracy to be used for scanning said original image in said scanning system, said digital data accuracy being at least as great as that to be used for said final image processing of said original image;
scanning said original image in said scanning system between said scan limits at said determined spatial resolution and at said determined digital data accuracy to obtain a digital data representation of said original image; and,
performing said final image processing of said original image using the digital data representation of said original image.

2. The method for scanning and final image processing of original images according to Claim 1, further including the steps of:
archiving the digital data representation of said original image in a read-only format; and
performing said final image processing of said original image using the archived digital data representation of said original image.

3. The method for scanning and final imaging processing of original images according to Claim 2, further including the step of:
performing said final image processing of said original image in parallel on a plurality of workstations using the archived digital data representation of said original image.
